# FASCICULE DE BREVET EUROPEEN

(11) **EP 0 516 518 B1**
(45) Date de publication et mention de la délivrance du brevet: **31.07.1996**
(21) Numéro de dépôt: 92401410.3
(22) Date de dépôt: 22.05.1992
(51) Int. Cl.: H02G 15/22

(54) **Dispositif de protection contre les effets d'un claquage pour extrémité de câble électrique**
Vorrichtung zum Schutz gegen Auswirkungen eines Überschlags für Kabelendverschluss
Device for protection against the effects of flash-over for electrical cable end

(30) Priorité: 29.05.1991 FR 9106455
(43) Date de publication de la demande: 02.12.1992
(73) Titulaire: ALCATEL CABLE, F-92111 Clichy Cédex (FR)
(72) Inventeur: Darcy, André, F-62100 Calais (FR); François, Daniel, F-62340 Andres (FR); Gahungu, François, F-62100 Calais (FR)
(74) Mandataire: Weinmiller, Jürgen

(56) Documents cités:
- WO-A-80/00287
- FR-A- 2 590 739
- US-A- 4 123 619

## Description

La présente invention concerne un dispositif de protection contre les effets d'un claquage pour extrémité de câble électrique à haute ou très haute tension. Un tel dispositif constitue en particulier une terminaison extérieure ou intérieure, sous pression de gaz diélectrique, de raccordement du câble haute tension à un appareillage, tel qu'un transformateur ou une ligne aérienne par exemple. Il s'applique plus particulièrement aux extrémités de câble à isolation synthétique, sous tension de dizaines de milliers de volts de l'ordre de 100 à 400 kV, dont les courants de décharge en cas de défaut peuvent atteindre des dizaines de milliers d'ampères.

Un tel dispositif comporte de manière connue un isolateur entourant l'extrémité du câble en définissant autour d'elle une enceinte étanche sous pression de gaz diélectrique. L'isolateur est fermé de manière étanche à l'une de ses extrémités dite supérieure par une calotte métallique, que traverse le conducteur du câble pour son raccordement à une borne fixée sur cette calotte. Il est également fermé à son autre extrémité, dite base, relativement au câble, par une pièce métallique.

Un tel dispositif de protection est décrit notamment dans le document FR-A-2 590 739, pour un câble haute tension à isolation interne synthétique dont le conducteur central est mis à nu juste en amont de la calotte de fermeture de l'isolateur pour son raccordement à la borne.

Un dispositif de ce type est également décrit dans le document US-A-4 123 619, pour une terminaison couplée à un câble haute tension à isolation gazeuse. Dans ce dispositif de terminaison, l'isolateur est monté autour d'un conducteur axial de terminaison. Il est porté par un support métallique, en forme de cylindre épaulé, sur lequel sont également fixés la structure de couplage au câble et un anneau Coronna. Cet anneau s'étend le long et à proximité de la surface intérieure de la partie dite arrière de l'isolateur sur le support, pour régulariser à ce niveau le champ électrique dû au conducteur de transition.

Dans ces dispositifs de protection, l'enceinte sous pression de gaz diélectrique est prévue pour tenir une pression de service de l'ordre de 8 à 10 bars et est de volume de l'ordre de 50 litres et plus. Un court-circuit dû à un défaut d'isolation interne du câble et/ou des surtensions excessives peut provoquer la fusion des parties métalliques et isolantes de l'extrémité du câble, une surpression brutale du gaz diélectrique, des courants de décharge dans le gaz diélectrique et l'explosion de l'isolateur, avec projection à distance de débris métalliques, de débris de l'isolateur et de tous les produits de décomposition des matériaux adjacents.

Dans un but de protection contre l'explosion possible de l'isolateur, on a jusqu'ici, en pratique, muni la paroi de l'enceinte, au-delà de la base de l'isolateur, d'un disque de rupture permettant l'évacuation à l'air libre du gaz diélectrique, ainsi que des débris métalliques et de tous les produits de décomposition des matériaux adjacents entraînés par celui-ci. On ne pouvait cependant pas éviter parfois des impacts de débris métalliques sur la surface interne de l'isolateur, entraînant sa détérioration ou sa rupture. En outre, le soufflage de l'arc par le gaz diélectrique n'est pas toujours aussi rapide qu'on pouvait le souhaiter.

La présente invention a pour but de procurer un dispositif de protection plus efficace, pour éviter l'explosion de l'isolateur ainsi que les impacts de débris métalliques sur la surface interne de l'isolateur, assurer l'entraînement de tels débris vers un orifice libéré par le disque précité de rupture et réduire le temps de soufflage de l'arc par le gaz diélectrique.

La présente invention a donc pour objet un dispositif de protection contre les effets d'un claquage pour extrémité de câble électrique haute ou très haute tension, à conducteur central, isolation synthétique sur ledit conducteur et écran semi-conducteur sur ladite isolation tous successivement dénudés le long d'une partie d'extrémité dudit câble, comportant un isolateur terminal et une enceinte métallique couplée audit isolateur et équipée d'un disque de rupture, montés autour de la partie d'extrémité dudit câble en définissant, autour de cette partie d'extrémité, une chambre étanche mise sous pression de gaz diélectrique et susceptible de s'ouvrir à l'air ambiant par ledit disque de rupture en cas de claquage et de surpression résultante dudit gaz, caractérisé en ce qu'il comporte une manchette métallique de révolution, de protection dudit isolateur, s'étendant dans ladite chambre entre ledit isolateur et la partie terminale de l'écran semi-conducteur dénudé et ayant une première extrémité couplée à ladite enceinte métallique et une deuxième extrémité opposée prévue suffisamment proche du câble pour que la section droite de la portion de ladite chambre entre ladite deuxième extrémité de la manchette et le câble soit très nettement inférieure à la section droite entre ladite deuxième extrémité de la manchette et la surface interne de l'isolateur.

Le dispositif de l'invention présente en outre de préférence au moins l'une des caractéristiques additionnelles suivantes :
- la manchette s'étend au moins le long d'une zone de claquage, définie dans ladite chambre autour d'une partie dite arrière d'un déflecteur monté sur l'extrémité de l'écran semi-conducteur dénudé et sur une partie attenante de l'isolation dénudée dudit câble.
- ladite deuxième extrémité de ladite manchette forme un rebord torique, présentant une convexité du côté dudit câble.
- la manchette est entièrement métallique,
- la manchette est en métal recouvert sur sa surface externe et sur son rebord torique d'un matériau composite en fibres minérales et résine, par exemple.

Il est décrit ci-après, à titre d'exemple et en référence aux figures du dessin annexé, des dispositifs selon l'invention.
La figure 1 représente en demi-coupe diamétrale partielle un dispositif de protection conforme à l'invention, monté sur une extrémité de câble haute tension à isolation interne synthétique,
La figure 2 représente en coupe diamétrale un autre exemple de réalisation de l'un des éléments dit manchette du dispositif selon la figure 1.

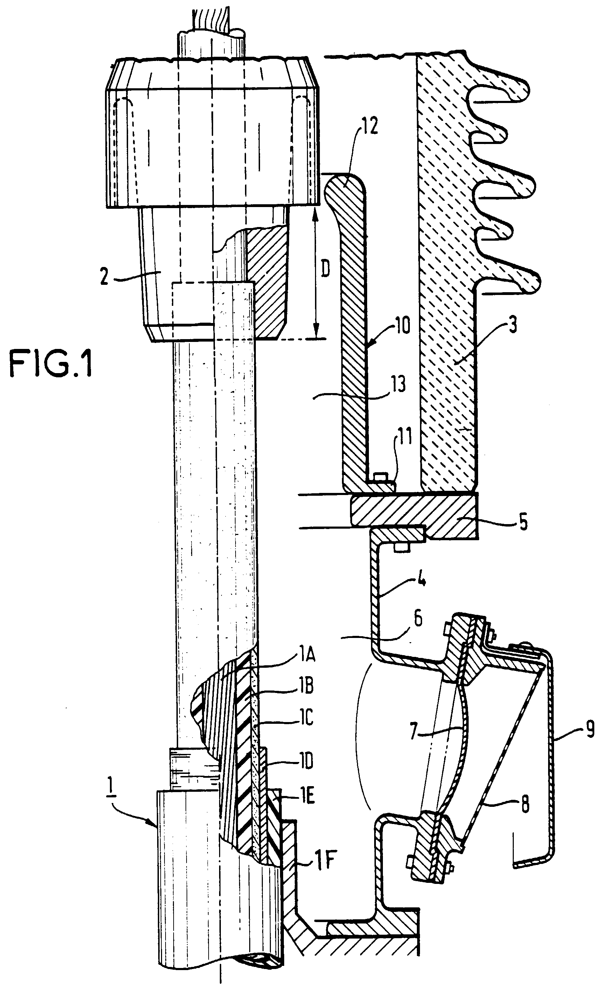

Dans la figure 1, le câble électrique 1 est du type comportant un conducteur central 1A, un isolant synthétique interne 1B sur le conducteur central, un écran semi-conducteur 1C sur l'isolant, un écran métallique 1D formé par une gaine de plomb ou un rubannage ou des fils de cuivre, sur l'écran semi-conducteur, et une gaine isolante lE de protection extérieure. Les couches successives sur le conducteur central sont dénudées sur des longueurs différentes, le long de l'extrémité du câble équipée du dispositif de protection. Un déflecteur 2 est enfilé sur l'extrémité de l'écran semi-conducteur dénudé 1C et s'étend au-delà sur l'isolant interne.

Le dispositif de protection contre les effets de claquage comporte un isolateur 3 et une enceinte métallique 4, couplés l'un à l'autre et entourant l'extrémité du câble. L'isolateur est en porcelaine, en verre, ou en matériau composite tel qu'en fibres de verre et résine époxy. Il s'étend depuis le bout du câble jusque légèrement au-delà du déflecteur. Il est fermé en bout du câble de manière connue et non représentée par une calotte métallique que traverse le conducteur central dénudé pour son raccordement à une borne ou analogue. Son extrémité opposée, dite base de l'isolateur, est reliée à l'enceinte métallique 4 par un support 5 fixé sur une bride de l'enceinte. L'autre extrémité de l'enceinte est reliée à un support 1F, fixé sur la gaine extérieure 1E du câble, ou en variante, sur l'écran 1C.

L'enceinte métallique et l'isolateur définissent une chambre étanche 6 remplie de gaz diélectrique (hexafluorure de soufre par exemple), autour de l'extrémité du câble.

Un disque de rupture 7, par exemple en nickel, permet en cas de claquage la mise à l'atmosphère de la chambre 6 sous l'effet de la surpression du gaz diélectrique. A l'extérieur de celui-ci, un grillage 8 assure le cas échéant l'arrêt de particules métalliques ou autres provenant de l'extrémité du câble, en présence d'un défaut d'isolation interne, qui peuvent être projetées et entraînées par les courants de claquage et de décharge à travers le gaz diélectrique. Une auge de recueil 9 assure une protection supplémentaire en cas de détérioration du grillage.

Une manchette métallique de protection 10, de forme générale cylindrique, fixée par une collerette 11 elle-même fixée sur le support 5, entoure l'extrémité du câble. Elle s'étend au moins jusqu'au-delà de la zone de claquage D située au niveau de la partie terminale du déflecteur sur l'écran semi-conducteur.

Cette manchette se termine par un rebord torique 12 à convexité tournée vers le déflecteur. La manchette 10 définit entre elle et le déflecteur, en particulier autour de la zone de claquage, un canal annulaire 13 concentrant l'onde de pression du gaz diélectrique apparaissant lors du claquage, et la canalisant vers l'enceinte métallique pour la destruction instantanée du disque de rupture 7 et la mise à l'atmosphère de la chambre 6. Dès lors, l'échappement à l'atmosphère de gaz diélectrique dans le canal annulaire 13 s'effectue à une grande vitesse, assurant un soufflage très rapide de l'arc de défaut et dirigeant vers l'orifice dégagé par le disque de rupture les projections de métal fondu.

La forme torique du rebord saillant intérieurement mais non saillant extérieurement de la manchette évite de perturber extérieurement les lignes de champ électrique et permet de créer intérieurement une perte de charge à l'onde de pression vers l'isolateur. La manchette est par ailleurs de résistance suffisante pour pouvoir supporter les effets destructeurs de décharges de forte puissance accompagnées de débris métalliques.

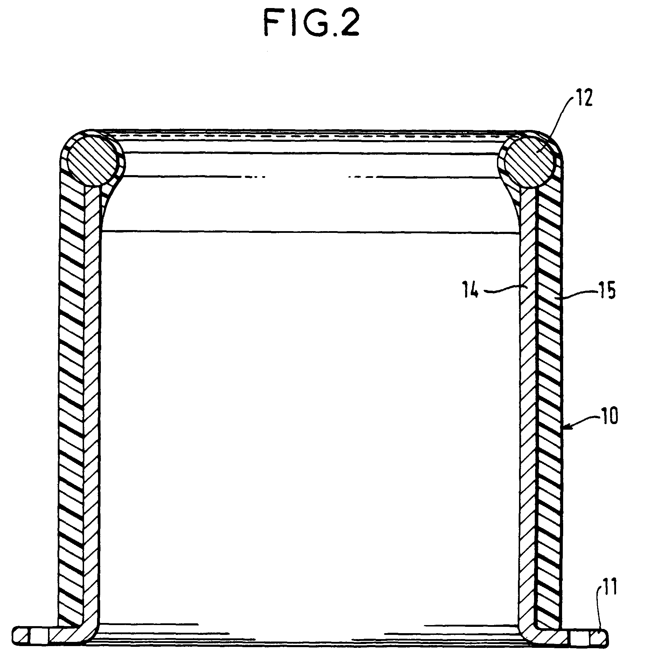

La figure 2 représente en coupe diamétrale une manchette de protection dite mixte et désignée sous la référence 10 précitée. Elle est à corps métallique 14 muni dans cet exemple d'un revêtement externe 15 en matériau composite fibres de verre-résine époxy enrobant en outre son extrémité torique 12. Cette manchette est munie comme la manchette totalement métallique de la figure 1 d'une collerette 11 de fixation sur le support annnulaire 5 de la figure 1.

Une manchette entièrement métallique ou mixte selon l'invention, disposée autour de l'extrémité d'un câble à haute tension, au niveau de la partie basse du déflecteur de champ électrique, a permis à l'isolateur de résister à un courant de court-circuit de 31500 ampères sous 20000 volts d'une durée de 0,5 seconde.

## Revendications

1. Dispositif de protection contre les effets d'un claquage pour extrémité de câble électrique haute ou très haute tension (1), à conducteur central, isolation synthétique sur ledit conducteur et écran semi-conducteur sur ladite isolation tous successivement dénudés le long d'une partie d'extrémité dudit câble, comportant un isolateur terminal (3) et une enceinte métallique (4) couplée audit isolateur et équipée d'un disque de rupture (7), montés autour de la partie d'extrémité dudit câble en définissant, autour de cette partie d'extrémité, une chambre étanche (6) mise sous pression de gaz diélectrique et susceptible de s'ouvrir à l'air ambiant par ledit disque de rupture (7) en cas de claquage et de surpression résultante dudit gaz, caractérisé en ce qu'il comporte une manchette métallique de révolution (10), de protection dudit isolateur, s'étendant dans ladite chambre (6) entre ledit isolateur (3) et la partie terminale de l'écran semi-conducteur dénudé et ayant une première extrémité couplée à ladite enceinte métallique et une deuxième extrémité opposée (12) prévue suffisamment proche du câble pour que la section droite de la portion de ladite chambre entre ladite deuxième extrémité de la manchette et le câble soit très nettement inférieure à la section droite entre ladite deuxième extrémité de la manchette et la surface interne de l'isolateur.

2. Dispositif selon la revendication 1, caractérisé en ce que ladite manchette (10) s'étend au moins le long d'une zone de claquage (D), définie dans ladite chambre autour d'une partie dite arrière d'un déflecteur (2) monté sur l'extrémité de l'écran semi-conducteur dénudé et sur une partie attenante de l'isolation dénudée dudit câble.

3. Dispositif selon la revendication 2, caractérisé en ce que ladite deuxième extrémité (12) de ladite manchette (10) forme un rebord torique (12), présentant une convexité du côté dudit câble.

4. Dispositif selon l'une des revendications 1 à 3, caractérisé en ce que ladite manchette (10) est entièrement métallique.

5. Dispositif selon l'une des revendications 1 à 3, caractérisé en ce que ladite manchette (10) comporte un revêtement (15) sur sa surface externe, formé en un matériau composite en fibre et résine.

6. Dispositif selon la revendication 5, caractérisé en ce que ledit revêtement (15) de matériau composite recouvre totalement ladite deuxième extrémité (12) de ladite manchette (10).

## Claims

1. A device for protecting, from the effects of insulation breakdown, the end of a high or very high tension electric cable (1) having a central conductor, synthetic insulation on said conductor and a semiconductive screen on said insulation, all bared successively along an end portion of said cable, the device comprising an end insulator (3) and a metal enclosure (4) coupled to said insulator and fitted with a rupture disk (7), said insulator and enclosure being mounted around the end portion of said cable and defining a gastight chamber (6) around said end portion, which chamber contains dielectric gas under pressure and is capable of becoming open to ambient air via said rupture disk (7) in the event of insulation breakdown and the resulting excess pressure of said gas;
the device being characterized in that it includes a circularly symmetrical metal collar (10), said collar protecting said insulator and extending in said chamber (6) between said insulator (3) and the end portion of the bared semiconductive screen, and having a first end coupled to said metal enclosure and an opposite second end (12) provided sufficiently close to the cable for the cross-sectional area of the portion of said chamber between said second end of the collar and the cable to be very clearly less than the cross-sectional area between said second end of the collar and the inside surface of the insulator.

2. A device according to claim 1, characterized in that said collar (10) extends at least along a breakdown zone (D) defined in said chamber around a "rear" portion of a deflector (2) mounted on the end of the bared semiconductive screen and on an adjoining portion of the bared insulation of said cable.

3. A device according to claim 2, characterized in that said second end (12) of said collar (10) forms a toroidal rim (12) having a convex surface facing said cable.

4. A device according to any one of claims 1 to 3, characterized in that said collar (10) is made entirely of metal.

5. A device according to any one of claims 1 to 3, characterized in that said collar (10) includes a covering (15) on its outside surface made of a composite material of strong fibers and resin.

6. A device according to claim 5, characterized in that said covering (15) of composite material completely covers said second end (12) of said collar (10).

## Patentansprüche

1. Schutzvorrichtung gegen die Auswirkungen eines Durchschlags für ein Ende eines elektrischen Hochspannungs- oder Höchstspannungskabels (1), das einen zentralen Leiter, eine Kunststoffisolierung auf dem Leiter und eine halbleitende Abschirmung auf der Isolierung besitzt, die alle nacheinander entlang eines Teils des Endes dieses Kabels abisoliert werden, wobei die Vorrichtung einen Endisolator (3) und ein mit dem Isolator gekoppeltes und mit einer Reißscheibe (7) ausgestattetes metallischen Gehäuse (4) aufweist, die um den Endbereich des Kabels montiert sind und um diesen Endbereich eine dichte Kammer (6) bilden, die mit einem unter Druck stehenden dielektrischen Gas gefüllt ist und sich im Fall eines Durchschlags und eines daraus entstehenden Überdrucks des Gases über die Reißscheibe (7) zur Umgebungsluft hin öffnet, dadurch gekennzeichnet, daß sie eine drehsymmetrische metallische Manschette (10) zum Schutz des Isolators enthält, die sich in der Kammer (6) zwischen dem Isolator (3) und dem Endbereich der abisolierten halbleitenden Abschirmung erstreckt und mit ihrem ersten Ende mit dem metallischen Gehäuse gekoppelt ist und mit ihrem zweiten, entgegengesetztes Ende (12) so nahe beim Kabel liegt, daß die Breite des Abschnitts der Kammer zwischen dem zweiten Ende der Manschette und dem Kabel deutlich geringer als die Breite zwischen diesem zweiten Ende der Manschette und der Innenoberfläche des Isolators ist.

2. Vorrichtung nach Anspruch 1, dadurch gekennzeichnet, daß die Manschette (10) sich mindestens entlang einer Durchschlagszone (D) erstreckt, die in der Kammer um einen rückwärtigen Teil eines Deflektors (2), der auf das Ende der abisolierten halbleitenden Abschirmung und auf einem angrenzenden Bereich der freigelegten Isolierung des Kabels montiert ist.

3. Vorrichtung nach Anspruch 2, dadurch gekennzeichnet, daß das zweite Ende (12) der Manschette (10) einen Ringwulst (12) bildet, der auf der Seite des Kabels konvex ist.

4. Vorrichtung nach einem der Ansprüche 1 bis 3, dadurch gekennzeichnet, daß die Manschette (10) vollständig aus Metall besteht.

5. Vorrichtung nach einem der Ansprüche 1 bis 3, dadurch gekennzeichnet, daß die Manschette (10) eine Beschichtung (15) auf ihrer Außenoberfläche besitzt, die aus einem Verbundmaterial mit Fasern und Harz bedeckt ist.

6. Vorrichtung nach Anspruch 5, dadurch gekennzeichnet, daß die Beschichtung (15) aus Verbundmaterial vollständig das zweite Ende (12) der Manschette (10) bedeckt.
